# EUROPEAN PATENT SPECIFICATION

(11) **EP 2 263 930 B1**
(45) Date of publication and mention of the grant of the patent: **27.11.2013**
(21) Application number: 10380079.3
(22) Date of filing: 17.06.2010
(51) Int. Cl.: B62D 31/04

(54) **Double deck bus with uncovered or able to be uncovered upper deck**
Doppeldeckerbus mit unbedeckten Oberdeck oder mit zum Abdecken fähigem Oberdeck
Bus à double châssis ayant un toit supérieur découvert ou pouvant l'être

(30) Priority: 17.06.2009 ES 200901436
(43) Date of publication of application: 22.12.2010
(73) Proprietor: Carrocerías Ayats, S.A., 17401 Arbúcies Gerona (ES)
(72) Inventor: Vila Pascual, Rita, 17401 Arbucies(Girona) (ES)
(74) Representative: Isern-Jara, Nuria

(56) References cited:
- EP-A1- 0 628 470
- EP-A1- 1 728 708
- JP-A- 2006 027 571
- US-A- 1 604 777

## Description

### Technical Field

The present invention relates to a double deck bus provided with an enclosed lower deck and an open or able to be open upper deck provided with a retractable roof that can be removed. The double deck bus of the present invention is useful for tourist visits and the like.

### Background of the Invention

Double deck buses intended for the transport of people, particularly in urban routes, have been known for many time. These double deck buses generally comprise a chassis, a lower deck supported on said chassis, an upper deck supported by a structure above the lower deck, a stairway with a lower end close to the chassis and an upper end which ends in a floor of the upper deck, and a plurality of seats arranged both in the lower deck and in the upper deck. Some double deck buses of this type have an open upper deck or an upper deck that can be open temporarily, such that passengers can chose to travel under cover in the lower deck or out in the open air in the upper deck according to their predilections and meteorological conditions. A drawback of double deck buses with an open upper deck is that in the event of rain, the water received on the floor of the upper deck can accumulate and leak down to the lower deck, for example through the joints between the peripheral edges of the floor of the elevated deck and the side walls of the bus. The sealing of such joints is problematic because any sealing paste or elastic weather strip used tends to crack or come out due to the vibrations to which the body of the bus is subjected.

Document EP 1728708 A1 discloses a bus for tourist visits with a single open deck that is elevated with respect to the level of the chassis and above a driver's cabin. The floor of the elevated deck is made of a robust and water-resistant material and has a central region that is higher than opposite longitudinal edges, such that the water received in the floor of the elevated deck runs towards said opposite longitudinal edges where there is arranged a plurality of draining holes through which the water can be drained off. The draining holes are in fluid communication with draining pipes arranged adjacent to side walls of the bus to expel the water towards the surface on which the bus is traveling. Nevertheless, the mentioned document EP 1728708 A1 neither describes nor suggests means for sealing the joints between the peripheral edges of the floor of the elevated deck and the side walls of the bus, so simply providing draining holes is not enough to assure that the water does not leak down to a hypothetical lower deck.

It is known from US 1,604,777 A a double deck vehicle with an open upper deck supported by a structure above a lower deck and one stairway between both decks. The floor of the upper deck has a central region higher than side edges and a plurality of draining holes.

### Summary of the Invention

The present invention provides a double deck bus having a chassis, a lower deck supported on said chassis, an open or able to be open upper deck supported by a structure above the lower deck. The upper deck is delimited by surrounding walls, and the bus includes one or more stairways having a lower end close to the chassis and an upper end which ends in a floor of the upper deck. The mentioned floor of the upper deck is made of a robust and optionally water-resistant material and has a central region that is higher than side edges, such that the rain water falling on the floor of the upper deck drains off towards said side edges, close to which a plurality of draining holes is arranged. The bus is **characterized in that** the floor of the upper deck is coated with at least one continuous impermeable layer which, along a perimetric border adjacent to said surrounding walls of the upper deck, extends upwardly up to a certain height above the floor, and in that the draining holes are formed through said continuous impermeable layer.

With this construction, the continuous impermeable layer forms a water-tight basin which prevents any leak of water between said perimetric border of the floor and the surrounding walls. The only outlet for the water received in the upper deck is through the mentioned draining holes, which are distributed along portions of the perimetric border of the floor facing side walls forming part of said surrounding walls of the upper deck. The draining holes are connected to draining pipes which are secured to the structure and/or to the side walls and open up outside under the chassis.

Along the mentioned portions of the perimetric border of the floor adjacent to the side walls there are arranged baseboards having an upper end connected to the corresponding side wall and a lower end connected to the floor. The mentioned portions of the perimetric border of the floor adjacent to the side walls are at a certain distance from the corresponding side walls towards the inside of the upper deck, such that the baseboards extend in an inclined manner downwardly and inwardly from the side walls to the corresponding portions of the perimetric border of the floor.

In one embodiment, the floor comprises a base layer made of boards of water-repellant wood supported in the structure, comprising arched cross beams convex towards the upper side connected at their ends to vertical struts that are elevated from the chassis. Side edges of said base layer of the floor are very close to the side walls or in contact therewith. Each baseboard comprises a support layer made of metal sheet extending from the corresponding side wall to the floor. The mentioned metal sheet forms a lower tab extending on a strip of the base layer of the floor and is fixed to this strip of the base layer of the floor by means of screws, rivets or the like. The continuous impermeable layer forming the basin is arranged coating the base layer of the floor and said support layer of the baseboards, including the mentioned lower tab.

The floor of the upper deck has an opening in communication with the upper end of the mentioned stairway. This opening is surrounded by several protective walls, and one of these protective walls defines a doorway through which the passengers can pass from the stairway to the upper deck and vice versa. In a lower part of said doorway there is formed a projecting ridge, for example provided by a band of wood or another material fixed to the base layer of the floor, such that said projecting ridge is elevated with respect to the floor, and the projecting ridge is also coated with the continuous impermeable layer. The projecting ridge prevents the water received in the upper deck from being able to drain off through the doorway and through the stairway.

In one embodiment, the opening providing access to the stairway has at least one side adjacent to one of the side walls of the upper deck, and the corresponding baseboard is interrupted along said side of the opening adjacent to the side wall. The continuous impermeable layer extends upwardly up to a certain height above the floor in contact with the remaining protective walls surrounding the opening. The continuous impermeable layer likewise extends upwardly up to a certain height above the floor in contact with front and rear walls also forming part of the surrounding walls of the upper deck. The front wall optionally forms a front ledge and the mentioned rear wall forms a rear bench of the upper deck.

The continuous impermeable layer forming the basin can be made, for example, of a fiber-reinforced polymer resin applied on the base layer of the floor, the support layer of the baseboards and other surfaces of the surrounding walls after they have been installed in the structure of the bus. In one embodiment, said polymer resin is a polyester resin and said reinforcing fibers are glass fibers, for example in the form of a glass fiber fabric or mat. The continuous impermeable layer is preferably coated with one or more layers of paint and a final anti-slip layer formed, for example, by paint mixed with sand.

### Brief Description of the Drawings

The previous and other features and advantages will be more fully understood from the following detailed description of several embodiments with reference to the attached drawings, in which:
Figure 1 is a partial cross-section view of a double deck bus with an open or able to be open upper deck according to an embodiment of the present invention;
Figure 2 is a plan view of the double deck bus, wherein the seats have been omitted for greater clarity in the drawing;
Figure 3 is a partial cross-section view of an upper deck of the double deck bus taken along plane A-A of Figure 2;
Figure 4 is an enlarged view of detail IV of Figure 3;
Figure 5 is an enlarged view of detail V of Figure 4;
Figure 6 is a partial cross-section view taken along plane B-B of Figure 2; and
Figure 7 is a partial cross-section view taken along plane C-C of Figure 2.

### Detailed Description of an Embodiment

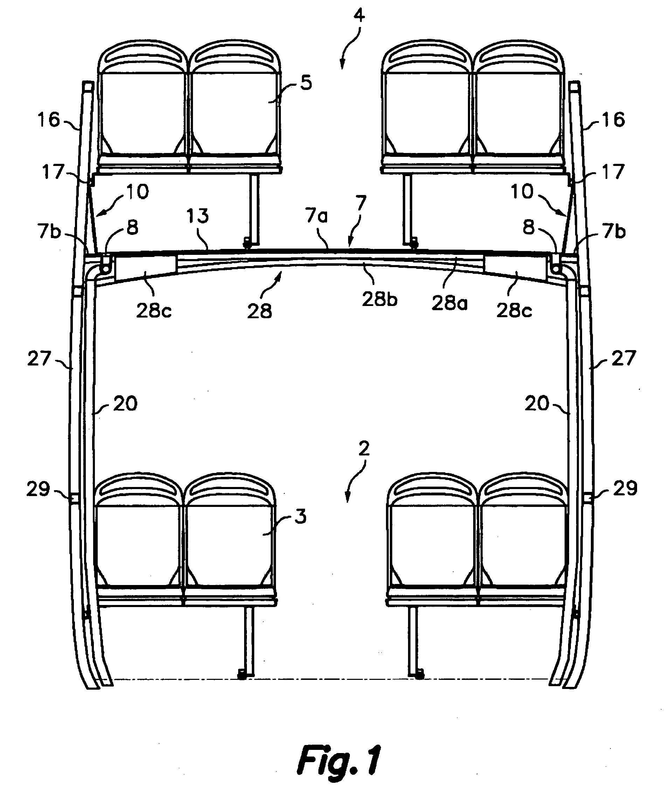

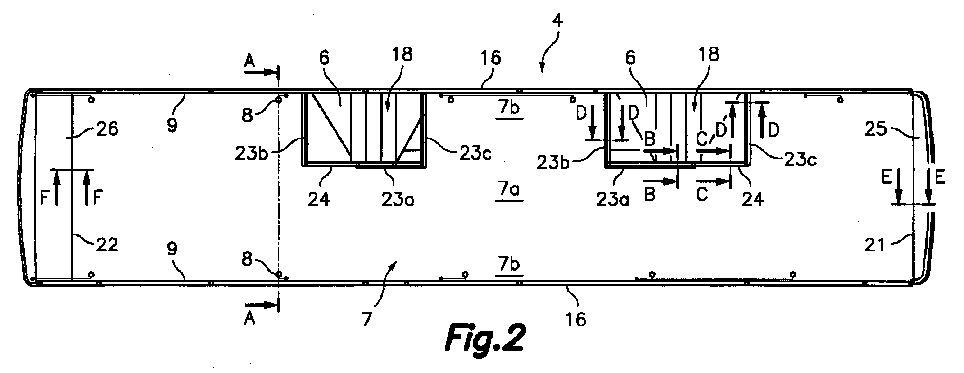

First making reference to Figures 1 and 2, said figures show a double deck bus according to an embodiment of the present invention, comprising a chassis (not shown), a lower deck 2 supported on said chassis, and an open or able to be open upper deck 4 supported by a structure above the lower deck 2. Generally, though it is not necessary, a plurality of lower seats 3 is arranged in said lower deck 2 and a plurality of upper seats 5 is arranged in said upper deck 4. The upper deck 4 has a floor 7 delimited by surrounding walls including opposite side walls 16, a front wall 21 and a rear wall 22. In the embodiment shown, the front wall 21 forms a front ledge 25 and the mentioned rear wall 22 forms a rear bench 26 within the upper deck 4. The bus includes a pair of stairways 6 having a lower end close to the chassis and an upper end which ends in said floor 7 of the upper deck 4, although it could alternatively have a single stairway 6. The floor 7 has a pair of openings 18, each in communication with said upper end of one of the stairways 6. In the embodiment shown, the openings 18 are quadrilateral and have a side adjacent to one of the side walls 16 and are surrounded on the three remaining sides by corresponding protective walls 23a, 23b, 23c, one of which defines a doorway 24 allowing the passage from the stairway 6 to the upper deck 4 and vice versa. In the event that the opening 18 was separated from the side wall 16, then it would be surrounded on the four sides by respective walls, at least one of them defining a doorway.

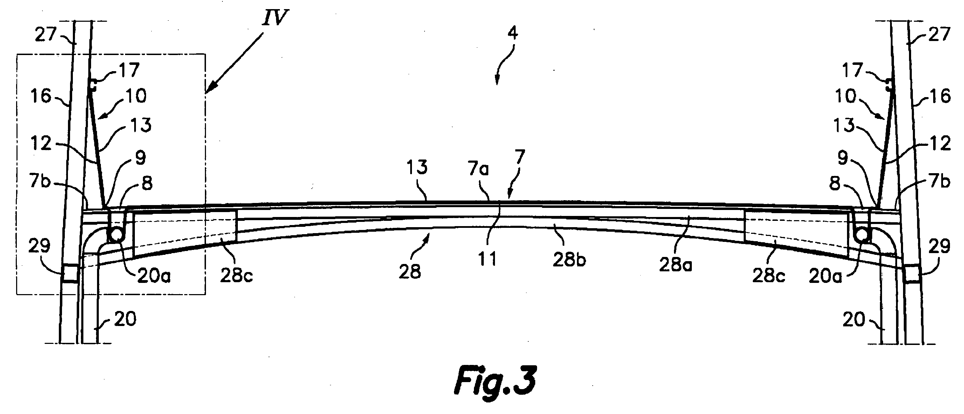

As is shown in Figure 3, the structure supporting the upper deck includes vertical struts 27 fixed at their lower ends to the chassis and connected to one another by longitudinal horizontal sections 29, and cross beams 28 fixed at their ends to said vertical struts 27. Each cross beam 28 is made up of an upper section 28a and a lower section 28b attached to one another by attachment plates 28c. The upper and lower sections 28a, 28b of the cross beam 28 are arched and present a convexity towards the upper side, the radius of curvature of the upper section 28a being longer than the radius of curvature of the lower section 28b. The floor 7 comprises a base layer 11 made of boards of a robust and preferably though not necessarily water-resistant material, such as a water-repellant wood supported in the upper section 28a of the cross beams 28 of the structure. Accordingly, the floor 7 of the upper deck 4 has a central region 7a that is higher than side edges 7b adjacent to and in contact with or very close to the side walls 16.

The floor 7 has a useful area delimited by a perimetric border 9, and along at least portions of said perimetric border 9 adjacent to the side walls 16 there are arranged baseboards 10 having an upper end connected to the corresponding side wall 16 and a lower end connected to the floor 7. In the embodiment shown, the mentioned portions of the perimetric border 9 adjacent to the side walls 16 are spaced from the corresponding side edges of the base layer 11 and the adjacent side walls 16, and horizontal tracks 17 serving to anchor the upper seats 5 are fixed in said side walls 16 of the upper deck 4 (Figure 1). The baseboards 10 extend generally from said tracks 17 to the portions of the perimetric border 9 adjacent to the side walls 16, so the baseboards 10 are inclined downwardly and inwardly from the side walls 16 to the perimetric border 9 of the floor 7. Each baseboard 10 comprises a support layer 12 made of metal sheet extending from the corresponding side wall 16 to the floor 7. This metal sheet forms a lower tab 12a extending on a strip of the base layer 11 of the floor 7 and is fixed to said strip of the base layer 11.

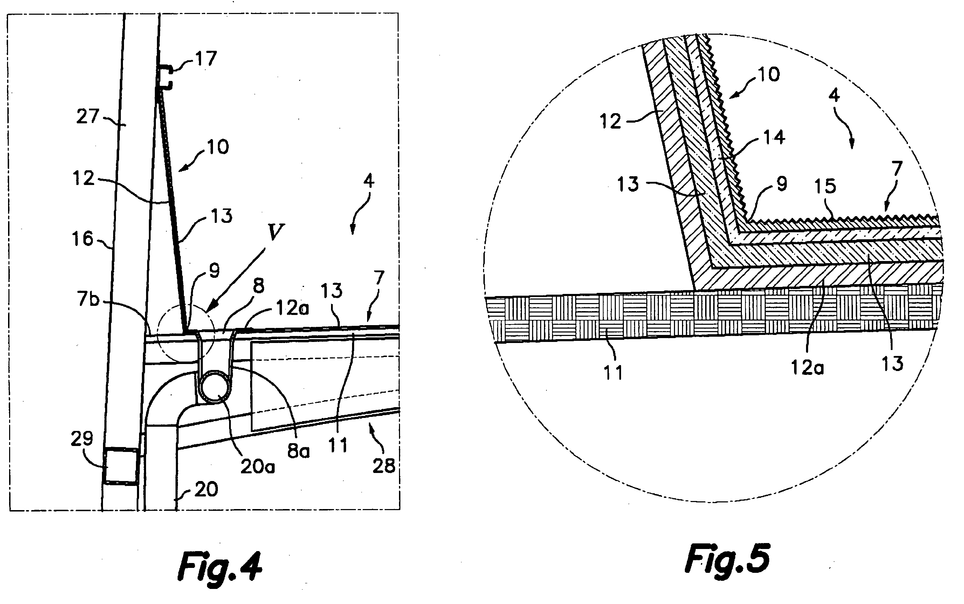

As is best seen in the enlarged detail of Figure 5, the base layer 11 of the floor 7 and said support layer 12 and lower tab 12a of the baseboards 10 are coated with a continuous impermeable layer 13. In other words, both the floor 7 and the baseboards 10 are coated with the mentioned continuous impermeable layer 13, comprising for example a fiber-reinforced polymer resin. In one embodiment, said polymer resin is a polyester resin and said reinforcing fibers are glass fibers. The continuous impermeable layer 13 is preferably coated with one or more layers of paint 14 and a final anti-slip layer 15, which can comprise, for example, a paint or resin mixed with a granular material, such as sand.

A plurality of draining holes 8 connected to draining pipes 20 which open up outside under the chassis is arranged along the portions of the perimetric border 9 of the floor 7 adjacent to the side walls 16, and therefore close to the side edges 7b of the floor 7 located at a lower level than the central region 7a thereof. Optionally, one or more of said draining holes 8 can be connected by means of respective sleeves 8a to a pipe 20a that is slightly inclined with respect to the horizontal located under the floor 7, and said pipe 20a is in turn connected to a considerably vertical draining pipe 20 adjacent to one of the side walls of the bus. Each of the mentioned sleeves 8a is installed through superimposed holes formed respectively in the continuous impermeable layer 13, in the tab 12a of the support layer 12 of the corresponding baseboard 10, and in the base layer 11 of the floor 7.

As has been mentioned above, in the embodiment shown each of the openings 18 formed in the floor 7 of the upper deck 4 for providing access to the stairway 6 has a side adjacent to one of the side walls 16 of the upper deck 4, and accordingly the corresponding baseboard 10 is interrupted along said sides of the opening 18 adjacent to the side wall 16. Nevertheless, the impermeable base layer 13 is arranged to also seal the joints between the floor 7 and the protective walls 23a, 23b, 23c surrounding the opening 18.

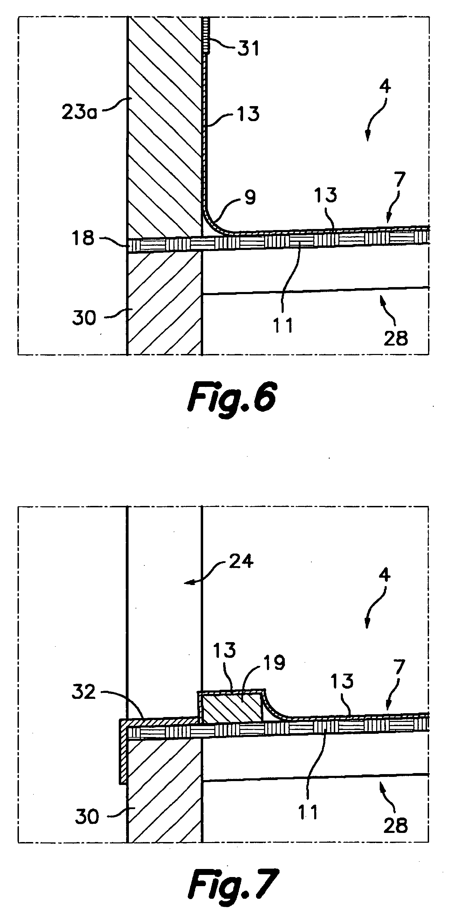

Figure 6 shows the arrangement of the impermeable base layer 13 in relation to one of the protective walls 23a surrounding the opening 18. Here, the base layer 11 of the floor 7 is connected to an upper edge of a panel 30 forming part of a stairwell for the stairway 6. The protective wall 23a is installed on a portion of the base layer 11 superimposed on the panel 30, and the continuous impermeable layer 13 covering the floor 7 extends upwardly up to a certain height above the floor 7 in contact with the protective wall 23a. The rest of the face of the protective wall 23a facing the upper deck 4 is coated with a tapestry material 31.

Figure 7 shows the arrangement of the impermeable base layer 13 in relation to the doorway 24 formed in one of the protective walls 23a surrounding the opening 18. The base layer 11 of the floor 7 is connected to the upper edges of said panel 30 forming part of the mentioned stairwell for the stairway 6, and the doorway 24 is formed above a portion of the base layer 11 superimposed on the panel 30. In a lower part of said doorway 24 adjacent to the floor 7 there is formed a projecting ridge 19 that is elevated with respect to the floor 7, and said projecting ridge 19 is coated with the continuous impermeable layer 13. For example, the projecting ridge 19 can be formed by a band of wood or other material fixed to the base layer 11 of the floor 7. The edge of the base layer 11 of the floor 7 in the doorway 24, which generally forms the uppermost step of the stairway 6, is covered by a protective section 32.

The continuous impermeable layer 13 is also arranged to seal the joints between the floor 7 and the other protective walls 23b, 23c surrounding the openings 18 and the joints between the floor 7 and the front and rear walls 21, 22 respectively forming the front ledge 25 and the rear bench 26 in a manner similar to that described above in relation to Figure 6. It must be indicated that views taken along planes D-D, E-E and F-F of Figure 1 would be similar to Figure 6 with regard to the arrangement of the continuous impermeable layer 13, so such views have been omitted. The continuous impermeable layer 13 extends upwardly up to a certain height above the floor 7 in contact with the baseboards 10 along the side walls 16 of the upper deck 4, with the front and rear walls 21, 22 of the upper deck 4 and with the protective walls 23a, 23b, 23c surrounding the openings 18 in the floor 7.

In summary, the floor 7 of the upper deck 4 is coated with a continuous impermeable layer 13 which, along the perimetric border 9 of the useful area of the floor 7 adjacent to the surrounding walls 16, 21, 22 of the upper deck 4 and to the protective walls 23a, 23b, 23c surrounding the opening 18 of the floor 7, extends upwardly up to a certain height above the floor 7 forming an impermeable basin, and draining holes 8 connected to one or more draining pipes 20 which open up outside under the chassis are formed in regions located at a lower level of the floor 7.

A person skilled in the art will be able to make modifications and variations from the embodiment shown and described without departing from the scope of the present invention as it is defined in the attached claims.

## Claims

1. A double deck bus with an open or able to be open upper deck, of the type comprising:
a chassis;
a lower deck (2) supported on said chassis;
an open or able to be open upper deck (4) supported by a structure above the lower deck (2), and delimited by surrounding walls (16, 21, 22); and
at least one stairway (6) having a lower end close to the chassis and an upper end which ends in a floor (7) of the upper deck (4);
wherein said floor (7) of the upper deck (4) has a central region (7a) that is higher than side edges (7b), and a plurality of draining holes (8) is arranged close to said side edges (7b),
being coated the floor (7) of the upper deck (4) with at least one continuous impermeable layer (13) extending upwardly up to a certain height above the floor (7) along a perimetric border (9) adjacent to said surrounding walls (16, 21, 22) of the upper deck (4), and said draining holes are formed through said continuous impermeable layer (13),
**characterized in that** along at least portions of said perimetric border (9) adjacent to side walls (16) forming part of said surrounding walls there are arranged baseboards (10) having an upper end connected to the corresponding side wall (16) and a lower end connected to the floor (7), said baseboards being coated with said continuous impermeable layer (13).

2. The bus according to claim 1, **characterized in that** the floor (7) comprises a base layer (11) made of boards of water-repellant wood supported in said structure and each baseboard (10) comprises a support layer (12) made of metal sheet extending from the corresponding side wall (16) to the floor (7) and forming a lower tab (12a) extending on a strip of the base layer (11) of the floor (7) to which it is fixed, wherein the base layer (11) of the floor (7) and said support layer (12) and lower tab (12a) of the baseboards (10) are coated with said continuous impermeable layer (13).

3. The bus according to claim 2, **characterized in that** said portions of the perimetric border (9) adjacent to the side walls (16) are spaced from the corresponding side walls (16), and the baseboards (10) extend in an inclined manner downwardly and inwardly from the side walls (16) to said portions of the perimetric border (9) of the floor (7).

4. The bus according to claim 3, **characterized in that** horizontal tracks (17) for anchoring upper seats (5) are fixed to said side walls (16) of the upper deck (4), and the baseboards (10) extend generally from said tracks (17) to the portions of the perimetric border (9) adjacent to the side walls (16).

5. The bus according to claim 1, **characterized in that** said draining holes (8) are arranged adjacent to said portions of the perimetric border (9) of the floor (7) adjacent to the side walls (16) and connected to draining pipes (20) which open up outside under the chassis.

6. The bus according to any of the previous claims, **characterized in that** the floor (7) has an opening (18) in communication with said upper end of said stairway (6), said opening (18) is surrounded by several walls (16, 23a, 23b, 23c), at least one of which defines a doorway (24), and in a lower part of said doorway (24) there is formed a projecting ridge (19) that is elevated with respect to the floor (7), said projecting ridge (19) being coated with the continuous impermeable layer (13).

7. The bus according to claim 6, **characterized in that** said projecting ridge (19) is formed by a band fixed to the base layer (11) of the floor (7).

8. The bus according to claim 6, **characterized in that** said opening (18) has at least one side adjacent to one of the side walls (16) of the upper deck (4), and the corresponding baseboard (10) is interrupted along said side of the opening (18) adjacent to the side wall (16).

9. The bus according to claim 6, **characterized in that** the continuous impermeable layer (13) extends upwardly up to a certain height above the floor (7) in contact with front and rear walls (21, 22) forming part of said surrounding walls of the upper deck (4) and with said walls (23a, 23b, 23c) surrounding the opening (18).

10. The bus according to any of the previous claims, **characterized in that** said continuous impermeable layer (13) comprises a fiber-reinforced polymer resin.

11. The bus according to claim 10, **characterized in that** said polymer resin is polyester and said reinforcing fibers are glass fibers.

12. The bus according to claim 10 or 11, **characterized in that** said continuous impermeable layer (13) is coated with at least one layer of paint (14) and a final anti-slip layer (15).

## Patentansprüche

1. Doppeldeckerbus mit einem offenen oder zu öffnenden Oberdeck, von dem Typ umfassend:
einen Unterbau;
ein Unterdeck (2) das von dem Unterbau getragen wird;
ein offenes oder zu öffnendes Oberdeck (4) das von einer Struktur über dem Unterdeck (2) getragen wird und von umgebenden Wänden (16, 21, 22) begrenzt wird; und
wenigstens einer Treppe (6) mit einem unteren Ende nahe des Unterbaus und einem oberen Ende, das auf einem Boden (7) des Oberdecks (4) endet;
wobei besagter Boden (7) des Oberdecks (4) einen zentralen Abschnitt (7a) hat, der höher ist als die Seitenränder (7b), und wobei eine Vielzahl von Abflusslöchern (8) in der Nähe der Seitenränder (7b) angeordnet ist,
wobei der Boden (7) des Oberdecks (4) beschichtet ist mit wenigstens einer durchgehenden undurchlässigen Schicht (13), die sich nach oben ausdehnt bis zu einer bestimmten Höhe über dem Boden (7) entlang eines umgebenden Randes (9), der angrenzt an die umgebenden Wände (16, 21, 22) des Oberdecks (4), und wobei die Abflusslöcher durch die durchgehende undurchlässige Schicht (13) hindurchgehen,
**dadurch gekennzeichnet, dass** zumindest entlang von Abschnitten des umgebenden Randes (9), anliegend an Seitenwände (16) die Teil besagter umgebender Wände sind, Bodenleisten (10) angebracht sind, deren oberes Ende mit der entsprechenden Seitenwand (16) verbunden ist und deren unteres Ende mit dem Boden (7) verbunden ist, wobei die Bodenleisten mit dieser durchgehenden undurchlässigen Schicht (13) beschichtet sind.

2. Bus nach Anspruch 1, **dadurch gekennzeichnet, dass** der Boden (7) eine Grundschicht (11) umfasst, die aus Platten wasserabstossenden Holzes, die von dieser Struktur getragen werden, gemacht ist, und wobei jede Bodenleiste (10) eine Trägerschicht (12) aus einer Metallfolie umfasst, die sich von der entsprechenden Seitenwand (16) zum Boden (7) erstreckt und einen unteren Flügel (12a) bildet, der sich auf einem Streifen der Grundschicht (11) des Bodens (7) ausdehnt, an dem sie befestigt ist, wobei die Grundschicht (11) des Bodens (7) und besagte Trägerschicht (12) und der untere Flügel (12a) der Bodenleisten (10) mit dieser durchgehenden undurchlässigen Schicht (13) beschichtet sind.

3. Bus nach Anspruch 2, **dadurch gekennzeichnet, dass** besagte Abschnitte des umgebenden Randes (9) neben den Seitenwänden (16) von den entsprechenden Seitenwänden (16) beabstandet sind, und sich die Bodenleisten (10) in geneigter Form nach unten und in die Seitenwände (16) bis zu besagten Abschnitten des umgebenden Randes (9) des Bodens (7) erstrecken.

4. Bus nach Anspruch 3, **dadurch gekennzeichnet, dass** horizontale Schienen (17) zur Verankerung der oberen Sitze (5) an den Seitenwänden (16) des Oberdecks (4) befestigt sind, und die Bodenleisten (10) sich im allgemeinen von den Schienen (17) bis zu den Abschnitten des umgebenden Randes (9) neben den Seitenwänden (16) erstrecken.

5. Bus nach Anspruch 1, **dadurch gekennzeichnet, dass** besagte Abflusslöcher (8) neben den Abschnitten des umgebenden Randes (9) des Bodens (7) neben den Seitenwänden (16) angeordnet sind und mit Abflussrohren (20) verbunden sind, die unter dem Unterbau nach aussen münden.

6. Bus nach einem der vorhergehenden Ansprüche, **dadurch gekennzeichnet, dass** der Boden (7) eine Öffnung (18) aufweist, die mit dem oberen Ende der Treppe (6) kommuniziert, wobei die Öffnung (18) von mehreren Wänden (16, 23a, 23b, 23c) umgeben ist, von denen wenigstens eine Türöffnung (24) definiert, wobei im unteren Teil des Türöffnung (24) ein Wulst (19) gebildet ist, der sich gegenüber dem Boden (7) erhebt, wobei der Wulst (19) mit der durchgehenden undurchlässigen Schicht (13) beschichtet ist.

7. Bus nach Anspruch 6, **dadurch gekennzeichnet, dass** der Wulst (19) von einem Band gebildet wird, das mit der Grundschicht (11) des Bodens (7) verbunden ist.

8. Bus nach Anspruch 6, **dadurch gekennzeichnet, dass** die Öffnung (18) wenigstens eine Seite aufweist, die an eine der Seitenwände (16) des Oberdecks (4) angrenzt, und dass die entsprechende Bodenleiste (10) unterbrochen ist entlang der an die Seitenwand (16) angrenzende Öffnung (18).

9. Bus nach Anspruch 6, **dadurch gekennzeichnet, dass** sich die durchgehende undurchlässige Schicht (13) nach oben bis zu einer gewissen Höhe über dem Boden (7) in Kontakt mit Vorder- und Rückwänden (21,22) erstreckt, die Teil der umgebenden Wände des Oberdecks (4) sind und wobei die Seitenwände (23a, 23b, 23c) die Öffnung (18) umgeben.

10. Bus nach einem der vorhergehenden Ansprüche, **dadurch gekennzeichnet, dass** die durchgehende undurchlässige Schicht (13) ein faserverstärktes Polymerharz enthält.

11. Bus nach Anspruch 10, **dadurch gekennzeichnet, dass** das Polymerharz Polyester ist und die Verstärkungsfasern Glasfasern sind.

12. Bus nach Anspruch 10 oder 11, **dadurch gekennzeichnet, dass** die durchgehende undurchlässige Schicht (13) mit wenigstens einer Lackschicht (14) und einer abschliessenden Gleitschutzschicht (15) beschichtet ist.

## Revendications

1. Bus à double niveau ayant un niveau supérieur découvert ou pouvant l'être, du type qui comprend:
un châssis;
un niveau inférieur (2) supporté sur ce châssis;
un niveau supérieur découvert ou pouvant l'être (4) supporté par une structure au-dessus du niveau inférieur (2), et délimité par des parois environnantes (16, 21, 22); et
au moins un escalier (6) qui a une extrémité inférieur près du châssis et une extrémité supérieure qui se termine dans un fond (7) du niveau supérieur (4);
le fond (7) du niveau supérieur (4) ayant une région centrale (7a) plus élevée que les bords latéraux (7b), et une pluralité de ouvertures de drainage (8) est disposée près de ces bords latéraux (7b),
le fond (7) du niveau supérieur (4) étant revêtu par au moins une couche continue imperméable (13) qui s'étend vers le haut jusqu'à une certaine hauteur au-dessus du fond (7) le long d'un bord périmétrique (9) adjacent à ces parois environnantes (16, 21, 22) du niveau supérieur (4), et ces ouvertures de drainage sont formées à travers de cette couche continue imperméable (13),
**caractérisé en ce que** le long de pour le moins des portions de ce bord périmetrique (9) adjacent aux parois environnantes (16), formant partie de ces parois environnantes, sont disposés des soubassements (10) qui ont une extrémité supérieure connectée à la paroi latérale correspondante (16) et une extrémité inférieure connectée au fond (7), ces soubassements étant revêtus de cette couche continue imperméable (13).

2. Bus suivant la revendication 1, **caractérisé en ce que** le fond (7) comprend une couche de base (11) fabriquée de planches de bois hydrofuge supportées dans cette structure et chaque soubassement (10) comprend une couche de support (12) faite de toile métallique qui s'étend de la paroi latérale correspondante (16) jusqu'au fond (7) et qui forme une aile inférieure (12a) qui s'étend sur une frange de la couche de base (11) du fond (7) auquel elle est fixée, où la couche de base (11) du fond (7) et cette couche de support (12) et aile inférieure (12a) des soubassements (10) sont revêtus de cette couche continue imperméable (13).

3. Bus suivant la revendication 2, **caractérisé en ce que** ces portions du bord périmetrique (9) adjacentes aux parois latérales (16) sont distancées des parois latérales correspondantes (16), et les soubassements (10) s'étendent de forme inclinée vers le bas et le haut, à partir des parois latérales (16) jusqu'aux portions du bord périmétrique (9) du fond (7).

4. Bus suivant la revendication 3, **caractérisé en ce que** des rails horizontaux (17) pour ancrer des sièges supérieurs (5) sont fixés aux parois latérales (16) du niveau supérieur (4), et les soubassements (10) s'étendent en général à partir de ces rails (17) jusqu'aux portions du bord périmétrique (9) adjacent aux parois latérales (16).

5. Bus suivant la revendication 1, **caractérisé en ce que** ces ouvertures de drainage (8) se trouvent adjacentes aux portions du bord périmétrique (9) du fond (7) adjacentes aux parois latérales (16) et connectées à des tubes de drainage (20) qui débouchent à l'extérieur, au-dessous du châssis.

6. Bus suivant une des revendications précédentes, **caractérisé en ce que** le fond (7) présente une ouverture (18) qui communique avec l'extrémité supérieure de cet escalier (6), cette ouverture (18) étant entourée de plusieures parois (16, 23a, 23b, 23c), desquelles au moins une définit une baie de porte (24), et dans une partie inférieure de cette baie de porte (24) est formé un ressaut (19) élevé par rapport au fond (7), ce ressaut (19) étant revêtu par la couche continue imperméable (13).

7. Bus suivant la revendication 6, **caractérisé en ce que** ce ressaut (19) est formé par une baguette fixée à la couche de base (11) du fond (7).

8. Bus suivant la revendication 6, **caractérisé en ce que** cette ouverture (18) a au moins un côté adjacent à une des parois latérales (16) du niveau supérieur (4), et le soubassement correspondant (10) est interrompu le long de ce côté de l'ouverture (18) adjacente à la paroi latérale (16).

9. Bus suivant la revendication 6, **caractérisé en ce que** la couche continue imperméable (13) s'étend vers le haut jusqu'à une certaine hauteur au-dessus du fond (7) en contact avec des parois de devant et derrière (21, 22) qui forment partie des parois environnantes du niveau supérieur (4) et avec ces parois (23a, 23b, 23c) qui entourent l'ouverture (18).

10. Bus suivant une des revendications précédentes, **caractérisé en ce que** cette couche continue imperméable (13) comprend une résine polymérique renforcée de fibres.

11. Bus suivant la revendication 10, **caractérisé en ce que** cette résine polymérique est du polyester et ces fibres de renforcement sont des fibres de verre.

12. Bus suivant la revendication 10 ou 11, **caractérisé en ce que** cette couche continue imperméable (13) est revêtue par au moins une couche de peinture (14) et une couche finale antiglissante (15).
